# EUROPÄISCHE PATENTSCHRIFT

(11) **EP 3 394 471 B1**
(45) Veröffentlichungstag und Bekanntmachung des Hinweises auf die Patenterteilung: **08.04.2020**
(21) Anmeldenummer: 16819421.5
(22) Anmeldetag: 19.12.2016
(51) Int. Cl.: F16D 65/12

(54) **HERSTELLUNGSVERFAHREN FÜR EINE VERBUNDBREMSSCHEIBE SOWIE ENTSPRECHENDE VERBUNDBREMSSCHEIBE**
PRODUCTION METHOD FOR A COMPOSITE BRAKE DISK AND CORRESPONDING COMPOSITE BRAKE DISK
PROCÉDÉ DE FABRICATION POUR DISQUE DE FREIN COMPOSITE ET DISQUE DE FREIN COMPOSITE CORRESPONDANT

(30) Priorität: 21.12.2015 CH 18862015
(43) Veröffentlichungstag der Anmeldung: 31.10.2018
(73) Patentinhaber: Ernst Grob AG, 8708 Maennedorf (CH)
(72) Erfinder: DÉRIAZ, Daniel, 8706 Meilen (CH); STEINRISSER, Niculo, 8708 Männerdorf (CH); SCHMID, Jan, 8608 Bubikon (CH)
(74) Vertreter: Frei Patent Attorneys
(86) Internationale Anmeldenummer: PCT/CH2016/000157
(87) Internationale Veröffentlichungsnummer: WO 2017/106981

(56) Entgegenhaltungen:
- GB-A- 1 528 114
- US-A- 5 988 324
- US-A- 6 033 032
- US-A- 6 035 978

## Beschreibung

Die Erfindung bezieht sich auf Bremsscheiben, genauer auf Verbundbremsscheiben, sowie auf Verfahren zum Herstellen von Verbundbremsscheiben und Bremsscheibentöpfe für diese. Sie bezieht sich auf Vorrichtungen und Verfahren gemäss dem Oberbegriff der unabhängigen Patentansprüche. Verbundbremsscheiben finden Anwendungen, z.B. im Fahrzeugbau, insbesondere im Kraftfahrzeugbau.

Verbundbremsscheiben finden mehr und mehr Anwendung vor allem im Kraftfahrzeugbau, da sie eine geringere Masse als herkömmliche Bremsscheiben haben können und weil sie wirtschaftlicher fertigbar sein können als herkömmliche Bremsscheiben.

Wie beispielsweise in WO 2010/102704 A1 dargelegt, kann eine Verbundbremsscheibe einen Bremsscheibentopf aus Blech, insbesondere Stahlblech, und einen Bremsring aus Gusseisen oder anderen Materialien aufweisen und sogar im wesentlichen aus diesen zwei Teilen bestehen. Ergänzend können noch weitere Elemente wie z.B. Sicherungsringe zur Anwendung kommen.

Ein Bremsscheibentopf weist meist einen rohrförmigen Abschnitt und einen daran anschliessenden Bodenteil auf oder besteht aus diesen zwei Teilen, wobei ein Bremsscheibentopf meist einstückig ausgebildet ist. Der rohrförmige Abschnitt kann zylindrisch ausgebildet sein; er kann aber auch (leicht) konisch ausgeführt sein.

Der Bremsring wird manchmal auch als Reibring bezeichnet. Er kann einteilig ausgebildet sein, z.B. ein Gussteil sein. Der Bremsring kann aber auch mehrteilig, z.B. zweiteilig sein und beispielsweise einen inneren Nabenteil und einen äusseren Bremsteil aufweisen, wobei der Nabenteil mit einer Innenverzahnung versehen sein kann und der Bremsteil gusstechnisch mit dem Nabenteil verbunden sein kann.

Ein Bremsmoment, das bei einem Bremsvorgang am Bremsring entsteht, wird vom Bremsring auf den Bremsscheibentopf übertragen, z.B. über entsprechende Profilierungen oder Verzahnungen in Bremsring und Bremsscheibentopf, genauer in dem rohrförmigen Abschnitt des Bremsscheibentopfes, so dass es auch auf den Bodenteil des Bremsscheibentopfes übertragen wird, von wo aus das Bremsmoment, typischerweise durch Reibung unter Verwendung von Schraubenbolzen, auf Radnaben von Fahrzeugrädern geleitet werden kann.

Bei der Herstellung einer Verbundbremsscheibe wird ein Bremsring auf den rohrförmigen Abschnitt aufgebracht, so dass er diesen umschliesst. Eine Beweglichkeit des Bremsring relativ zu dem rohrförmigen Abschnitt in radialer wie in axialer Richtung muss verhindert werden. Und zusätzlich ist dafür zu sorgen, dass keine Verkippung zwischen dem Bremsring und dem Bremsscheibentopf, genauer zwischen den Bremsflächen des Bremsrings und dem Bodenteil des Bremsscheibentopfes, besteht. Der Bremsring, oder genauer dessen Bremsflächen, müssen (bei der fertigen Verbundbremsscheibe) zu einer durch den Bremsscheibentopf definierten Referenzebene parallel ausgerichtet sein (kein bzw. nur ein vernachlässigbar kleiner Taumelwinkel).

Bei aus dem Stand der Technik bekannten Verbundbremsscheiben kann allerdings bei einem Einpressen des Bremsscheibentopfes in den Bremsring oder bei einem sonstigen Zusammenfügen von Bremsscheibentopf und Bremsring durch Summierung von Fertigungstoleranzen ein unzulässiger Plan- oder Taumelschlag entstehen. Um solche Verbundbremsscheiben dennoch nutzen zu können, findet eine Nachbearbeitung statt, in welcher (nach dem Zusammenfügen von Bremsscheibentopf und Bremsring) der Bremsring spanabhebend bearbeitet wird, also z.B. seine Bremsflächen überdreht werden ("Plandrehen"). Dies bedeutet einen zusätzlichen Arbeitsgang, der zu Zusatzkosten führt. Und bei beschichteten Bremsringen, z.B. im Falle von zur Erhöhung der Lebensdauer keramikbeschichteten Bremsringen / Bremsflächen, kann eine solche Nachbearbeitung gar nicht oder nur mit hohem Aufwand durchgeführt werden.

US6033032 zeigt eine Radnabenlagerung mit einem Aussenring. der einen Lagerflansch aufweist. Der Lagerflansch umfasst eine Positionierungsfläche, mit deren Hilfe eine Bremstrommel oder ein Träger für eine Scheibenbremse relativ zur Radnabenlagerung positioniert werden kann. Ferner umfasst der Lagerflansch einen Fortsatz, der durch Wälzen so verformt werden kann, dass ein Abschnitt der Bremstrommel bzw. des Trägers zwischen dem verformten Fortsatz und der Positionierungsfläche so eingeklemmt wird, dass eine drehfeste Verbindung entsteht.

GB1528114 zeigt eine Bremsscheibe die drehfest an einer Nabenlagerung befestigt wird, indem Fortsätze der Nabenlagerung in Vertiefungen der Bremsscheibe eingreifen. Die Fortsätze sind gegen ihr Ende hin überhängend, so dass die Bremsscheibe lokal von beiden Seiten in der Nabenlagerung eingebettet ist. Dadurch werden auch axiale Bewegungen der Scheibe relativ zur Nabenlagerung verhindert. Die Einbettung kann durch ein Deformieren der Fortsätze nach der Positionierung der Bremsscheibe realisiert werden.

US5988324 beschreibt eine Verbindung zwischen einem Lagerflansch einer Radnabenlagerung und einem Bremsflansch. Dabei weist entweder der Lagerflansch der Radnabenlagerung oder der Bremsflansch eine Aussparung auf. Mittels eines Stanzwerkzeugs wird dann derjenige Flansch, der keine Aussparung aufweist, so verformt, dass ein Teil dieses Flansches in die Aussparung hineingreift. Da mit diesem Vorgehen keine drehfeste Verbindung hergestellt wird, werden in der genannten US5988324 zusätzliche Massnahmen zur Herstellung einer drehfesten Verbindung offenbart, beispielsweise ein Verschmelzen der beiden Flansche oder speziell geformte Vertiefungen.

US6035978 zeigt verschiedene Möglichkeiten, mit welchen die Scheibe einer Scheibenbremse sowohl axial (also, im montierten Zustand, in eine Richtung entlang der Drehachse) als auch radial an einer an einer Radnabe montierbaren Halterung fixiert werden kann. Dies wird durch axiale und radiale Formschlüsse realisiert, die auf einer plastische Deformation (Stanzen) der Halterung beruhen.

Es ist eine Aufgabe der Erfindung, ein neuartiges Verfahren zur Herstellung einer Verbundbremsscheibe zu schaffen, insbesondere ein Verfahren, das es ermöglicht, in effizienter Art und Weise Verbundbremsscheiben mit ausreichend kleinem Planschlag zu erstellen. Weiter soll eine entsprechende Verbundbremsscheibe geschaffen werden. Eine weitere Aufgabe der Erfindung ist es, Verbundbremsscheiben mit besonders kleinem Planschlag zu erstellen.

Eine weitere Aufgabe der Erfindung ist es, Verbundbremsscheiben in relativ wenigen Fertigungsschritten zu fertigen.

Eine weitere Aufgabe der Erfindung ist es, Verbundbremsscheiben in kurzer Zeit in grosser Zahl zu fertigen.

Eine weitere Aufgabe der Erfindung ist es, bei der Herstellung von Verbundbremsscheiben auftretende Fertigungsungenauigkeiten auszugleichen, insbesondere im Falle von Fertigungsungenauigkeiten, die den Planschlag der Verbundbremsscheibe beeinflussen können.

Mindestens eine dieser Aufgaben wird zumindest teilweise durch Vorrichtungen und Verfahren gemäss den Patentansprüchen gelöst.

Das Verfahren zur Herstellung einer Verbundbremsscheibe betrifft eine Verbundbremsscheibe aufweisend einen Bremsring und einen Bremsscheibentopf. Der Bremsring weist mindestens eine Bremsfläche auf. Der Bremsscheibentopf weist einen rohrförmigen Abschnitt und einen daran anschliessenden Bodenteil auf, durch welchen eine Referenzebene definiert ist. In dem Verfahren werden die zuvor separaten Teile Bremsscheibentopf und Bremsring zusammengefügt. Nach dem Zusammenfügen wird der Bremsscheibentopf umgeformt und dadurch ein zwischen der mindestens einen Bremsfläche und der Referenzebene bestehender Taumelwinkel verringert.

Entsprechend wird auch der Taumel (und insbesondere: der maximale Taumel), den die mindestens eine Bremsfläche hat (gegenüber der Referenzebene) durch das (gezielte) Umformen des Bremsscheibentopfes verringert.

Es wird davon ausgegangen, dass die Bremsfläche der fertigen Verbundbremsscheibe möglichst genau senkrecht zu der Referenzachse ausgerichte sein soll. Für den Fall, dass es Verbundbremsscheiben geben sollte, bei denen dies anders wäre, würde eine andere Fläche oder Ebene des Bremsrings als Referenz für den Taumel genommen.

Der Taumel (und insbesondere der maximale Taumel) kann beispielsweise mittels eines Sensors bestimmt werden, typischerweise in einem aussen liegenden Bereich der mindestens einen Bremsfläche. Zumindest wenn der Taumel (nach dem Zusammenfügen, vor dem Umformen) einen vorgegebenen Sollwert überschreitet, z.B. 0.02 mm, wird die Umformung durchgeführt. Insbesondere kann die Stärke der Umformung von dem (mittels des Sensors bestimmten) Taumel abhängig gewählt sein.

Durch das Umformen kann die Ausrichtung der mindestens einen Bremsfläche gegenüber der Referenzebene geändert werden. So kann der Taumel (insbesondere der maximale Taumel) und der Taumelwinkel unter einen vorgegebenen Sollwert gebracht werden.

Eine gezielt erzeugte Formänderung des Bremsscheibentopfes kann die Verringerung des Taumelwinkels bewirken.

Bei dem Umformen können plastische Verformungen des Bremsscheibentopfes eine dauerhaften Verformung des Bremsscheibentopfes bewirken. Entsprechend kann eine dauerhafte genauere Ausrichtung der mindestens einen Bremsfläche erzielt werden.

In typischen Ausführungsformen weist der Bremsring zwei zueinander parallel ausgerichtete Bremsflächen auf.

Bei dem Zusammenfügen von Bremsscheibentopf und Bremsring können diese fest miteinander verbunden werden bzw. aneinander befestigt werden.

In manchen Ausführungsformen beinhaltet das Zusammenfügen von Bremsscheibentopf und Bremsring ein Erstellen einer Axialsicherung für den Bremsring auf dem rohrförmigen Abschnitt. Durch die Axialsicherung kann eine Beweglichkeit des Bremsringes in axialer Richtung (also entlang einer zu der Referenzebene senkrechten Referenzachse) eingeschränkt oder minimiert werden.

In manchen Ausführungsformen beinhaltet das Zusammenfügen von Bremsscheibentopf und Bremsring ein Erstellen einer Verdrehsicherung für den Bremsring auf dem rohrförmigen Abschnitt. Durch die Verdrehsicherung kann eine Beweglichkeit (Verdrehbarkeit) des Bremsringes um eine zu der Referenzebene senkrechte Referenzachse eingeschränkt oder minimiert werden.

In manchen Ausführungsformen beinhaltet das Umformen, dass der Bremsscheibentopf mittels mindestens eines Werkzeuges umgeformt wird. Dazu kann das mindestens eine Werkzeug mit dem Bremsscheibentopf in Eingriff gebracht werden.

In manchen Ausführungsformen ist eine Krafteinleitungsrichtung einer von dem mindestens einen Werkzeug für das Bewirken des Umformens ausgeübten Kraft senkrecht zu einer durch das Werkzeug bearbeiteten Oberfläche (Oberfläche eines Umformbereiches) ausgerichtet.

In manchen Ausführungsformen ist durch den Bodenteil eine zu der Referenzebene senkrechte Referenzachse definiert und durch den rohrförmigen Abschnitt eine Rohrachse definiert. Und durch das Umformen des Bremsscheibentopfes kann ein Kippwinkel zwischen der Rohrachse und der Referenzachse verändert werden. Ein solcher Kippwinkel ist in der Praxis allerdings sehr klein.

Vor dem Zusamenfügen von Bremsring und Bremsscheibentopf kann beispielsweise der rohrförmige Abschnitt (genauer: die Rohrachse) genau senkrecht zu dem Bodenteil (genauer: zu der Referenzebene) ausgerichtet sein. Durch das Umformen des Bremsscheibentopfes kann dann bewirkt werden, dass diese Ausrichtung nicht mehr ganz senkrecht ist, und zwar so, dass die Ausrichtung der mindestens einen Bremsfläche verbessert ist (geringerer Taumel, geringerer Taumelwinkel).

In manchen Ausführungsformen ist der Bremsring (nach dem Zusammenfügen) in einem Befestigungsbereich mit dem rohrförmigen Abschnitt in Kontakt, und das Umformen des Bremsscheibentopfes findet innerhalb eines axialen Bereiches statt, der sich von einem bodenteilseitigen Ende des Befestigungsbereiches bis einschliesslich zum Bodenteil erstreckt.

In manchen Ausführungsformen weist der rohrförmige Abschnitt einen Axialanschlag auf. Dieser kann Teil einer Axialsicherung sein. Das Umformen des Bremsscheibentopfes kann insbesondere innerhalb eines axialen Bereiches stattfinden, der sich von dem Axialanschlag bis einschliesslich zum Bodenteil erstreckt.

Dabei kann der Axialanschlag in manchen Ausführungsformen ein bodenteilseitiger Axialanschlag sein. Beispielsweise kann dann bei dem Zusammenfügen der Bremsring bis an den Axialanschlag auf den rohrförmigen Abschnitt aufgeschoben werden. Es ist z.B. in solchen Ausführungsformen möglich, dass der rohrförmige Abschnitt einen weiteren Axialanschlag aufweist, wobei der bodenteilseitige Axialanschlag bezüglich seiner axialen Position zwischen dem Bodenteil und dem weiteren Axialanschlag angeordnet ist.

In anderen Ausführungsformen weist der Bremsring zwei Bremsflächen auf, und der Axialanschlag ist in einer radialen Position vorgesehen, die zwischen den radialen Positionen der beiden Bremflächen liegt. Z.B. kann in solchen Ausführungsformen der Axialanschlag gleichzeitig mit dem Erzeugen einer Aussenprofilierung des Bremsscheibentopfes durch Einformen eines Bremsscheibentopfrohlings in eine Innenprofilierung des Bremsringes erzeugt werden.

In manchen Ausführungsformen findet das Umformen des Bremsscheibentopfes innerhalb eines Übergangsbereiches zwischen dem Bodenteil und dem rohrförmigen Teil statt. Beispielsweise kann der Übergangsbereich eine gerundete und/oder gewinkelte Verbindung zwischen Bodenteil und rohrförmigem Abschnitt bilden.

In manchen Ausführungsformen findet das Umformen des Bremsscheibentopfes innerhalb des rohrförmigen Abschnittes statt. Z.B kann das Umformen innerhalb des rohrförmigen Abschnittes zwischen dem Bodenteil und dem oben erwähnten Axialanschlag stattfinden.

In typischen Ausführungsformen variiert eine Stärke des Umformens des Bremsscheibentopfes über den Umfang des Bremsscheibentopfes, genauer: entlang einer Umfangskoordinate. Der Umfang bzw. die Umfangskoordinate (oder auch Azimuth, azimuthale Koordinate) ist durch die Referenzachse gegeben.

Die Stärke der Umformung kann also azimuthal varrierend sein.

Insbesondere kann die Variation der Stärke der Umformung in Abhängigkeit von einer Variation des Taumels gewählt sein. Z.B. kann die Variation der Stärke der Umformung spiegelsymmetrisch sein zu einer Ebene, die die Referenzachse und die azimuthale Richtung des maximalen Taumels enthält. Es kann vorgesehen sein, dass in einem ersten Bereich maximalen Taumels die Stärke der Umformung maximal ist und in einem zweiten Bereich maximalen Taumels die Stärke der Umformung minimal ist.

In manchen Ausführungsformen beinhaltet das Umformen einen einzigen Umformungsschritt. In diesem kann z.B. ein mindestens 180° umfassender azimuthaler Bereich (bezogen auf die Referenzachse) des Bremsscheibentopfes umgeformt werden.

In anderen Ausführungsformen beinhaltet das Umformen ein Nacheinander-Ausführen einer Mehrzahl von Umformungsschritten

Zum Beispiel kann der Bremsscheibentopf nacheinander in verschiedenen azimuthalen Bereichen umgeformt werden. Dabei kann die Stärke der Umformungsschritte mit der jeweiligen azimuthalen Richtung variieren.

Die durch das Umformen erzeugte Verformung des Bremsscheibentopfes kann eine kontinuierliche Verformung sein. In anderen Ausführungsformen kann die durch das Umformen erzeugte Verformung des Bremsscheibentopfes mehrere azimuthal verteilte Einzelverformungen beinhalten.

In manchen Ausführungsformen beinhaltet das Umformen, dass der Bremsscheibentopf mittels mindestens eines Werkzeuges plastisch verformt wird.

In manchen Ausführungsformen wird der Bremsscheibentopf von innen (also an seiner Innenseite) durch das mindestens eine Werkzeug bearbeitet.

In manchen Ausführungsformen wird der Bremsscheibentopf von aussen (also an seiner Aussenseite) durch das mindestens eine Werkzeug bearbeitet.

In manchen Ausführungsformen beinhaltet das Umformen einen Kaltumformvorgang.

In manchen Ausführungsformen beinhaltet das Umformen einen Pressvorgang.

In manchen Ausführungsformen beinhaltet das Umformen einen Walzvorgang.

In manchen Ausführungsformen beinhaltet das Umformen einen Prägevorgang.

In manchen Ausführungsformen beinhaltet das Umformen einen Drückvorgang.

In manchen Ausführungsformen beinhaltet das Umformen einen Fliessdrückvorgang.

Das Umformen kann auch Kombinationen zweier oder mehrerer der genannten Vorgänge beinhalten.

Als Werkzeuge kommen beispielsweise Drückrollen und/oder Presswerkzeuge und/oder Zahnräder und/oder Hämmer infrage.

In manchen Ausführungsformen beinhaltet das Umformen, dass in dem Bremsscheibentopf mindestens eine Delle erzeugt wird. Beispielsweise kann auf einer Seite (Innenseite oder Aussenseite) des Bremsscheibentopfes ein Werkzeug mit dem Bremsscheibentopf in Eingriff gebracht werden, während auf der gegenüberliegenden Seite (Aussenseite oder Innenseite) des Bremsscheibentopfes ein Gegenhalter mit dem Bremsscheibentopf in Kontakt ist, wobei der Gegenhalter nur ausserhalb eines Umformbereiches, in welchem der Bremsscheibentopf durch das mindestens eine Werkzeug umgeformt wird, mit dem Bremsscheibentopf in Kontakt ist. Dadurch kann die Form des Bremsscheibentopfes geändert werden und eine Delle entstehen, während eine Materialstärke des Bremsscheibentopfes im Umformbereich in diesem Fall (zumindest im wesentlichen) konstant bleiben kann.

Durch das Erzeugen einer Delle kann der Bremsscheibentopf quasi lokal kontrahiert werden, so dass der Bremsring in dem azimuthalen Bereich, in dem sich die Delle befindet, in Richtung zur Delle hin gekippt wird.

In manchen Ausführungsformen beinhaltet das Umformen, dass eine Wandstärke des Bremsscheibentopfes lokal reduziert wird.

Beispielsweise kann auf einer Seite (Innenseite oder Aussenseite) des Bremsscheibentopfes ein Werkzeug mit dem Bremsscheibentopf in Eingriff gebracht werden, während auf der gegenüberliegenden Seite (Aussenseite oder Innenseite) des Bremsscheibentopfes ein Gegenhalter mit dem Bremsscheibentopf in Kontakt ist, wobei der Gegenhalter in einem Umformbereich, in welchem der Bremsscheibentopf durch das mindestens eine Werkzeug umgeformt wird, mit dem Bremsscheibentopf in Kontakt ist. Dadurch kann die Materialstärke des Bremsscheibentopfes reduziert werden. Ein Entstehen einer Delle (die sowohl Innen- als auch Aussenwand des Bremsscheibentopfes beträfe) kann so verhindert werden.

Durch das Reduzieren der Wandstärke kann Material des Bremsscheibentopfes verdrängt werden und wegfliessen, so dass der Bremsscheibentopf quasi lokal gestreckt werden kann. Entsprechend kann dadurch der Bremsring in dem azimuthalen Bereich, in dem sich der Umformbereich befindet, in Richtung vom Umformbereich weg gekippt werden.

Um den Taumel zu bestimmen und/oder um die (azimuthalen) Richtungen maximalen Taumels zu bestimmen, kann ein Sensor benutzt werden, z.B. ein Distanzsensor.

In manchen Ausführungsformen wird mittels eines Sensors ein Mass für einen Taumel der mindestens einen Bremsfläche relativ zu der Referenzebene bestimmt wird. Es ist dann möglich, das Umformen des Bremsscheibentopfes in Abhängigkeit von dem bestimmten Mass durchzuführen.

Das genannte Mass für den Taumel kann z.B. der Taumel selbst sein oder eine zum Taumel proportionale Grösse.

In manchen Ausführungsformen weist der rohrförmige Abschnitt eine Aussenprofilierung auf, und der Bremsring weist eine entsprechende Innenprofilierung auf. Die Aussenprofilierung und die Innenprofilierung können zur Bildung einer Verdrehsicherung ineinandergreifen (Sicherung des Bremsringes auf dem Bremsscheibentopf gegen gegenseitiges Verdrehen).

Z.B. kann vorgesehen sein, dass bei dem Zusammenfügen von Bremsscheibentopf und Bremsring die Aussenprofilierung und die Innenprofilierung bereits bestehen und ineinandergreifen. In anderen Ausführungsformen wird ein Bremsscheibentopfrohling in einen mit einer Innenprofilierung versehenen Bremsring eingebracht, und dann der Bremsscheibentopfrohling mittels mindestens eines Praägewerkzeugs in die Innenprofilierung eingeformt und so die Innenprofilierung erzeugt.

In manchen Ausführungsformen findet das Umformen im Bereich der Aussenprofilierung des Bremsscheibentopfes statt.

In manchen Ausführungsformen findet das Umformen in einem Bereich ausserhalb der Aussenprofilierung des Bremsscheibentopfes statt.

Die Verbundbremsscheibe kann eine Verbundbremsscheibe sein, die gemäss einem der beschriebenen Verfahren hergestellt wurde.

Insbesondere kann die Verbundbremsscheibe aber in einer ersten zusätzlichen Sichtweise eine Verbundbremsscheibe sein, die einen Bremsring mit mindestens einer Bremsfläche und einen Bremsscheibentopf aufweist, wobei der Bremsscheibentopf einen rohrförmigen Abschnitt und einen mit dem rohrförmigen Abschnitt verbundenen Bodenteil aufweist, durch welchen eine Referenzebene und eine zu der Referenzebene senkrechte Referenzachse definiert sind.

Weiter weist der Bremsscheibentopf in der ersten zusätzlichen Sichtweise ein Verformungsmuster auf, das
- im Bereich einer ersten radialen Richtung Verformungen des Bremsscheibentopfes von maximaler Stärke aufweist;
- im Bereich einer der ersten radialen Richtung entgegengesetzten zweiten radialen Richtung Verformungen des Bremsscheibentopfes von minimaler Stärke aufweist; und
- in Bereichen von radialen Richtungen, die zwischen der ersten und der zweiten radialen Richtung liegen, Verformungen des Bremsscheibentopfes aufweist, deren Stärke mit zunehmendem Winkelabstand von der ersten Richtung bis zu der minimalen Stärke abnimmt.

Dabei kann die minimale Stärke null sein oder auch von null verschieden sein.

Die radialen Richtungen beziehen sich auf die Referenzachse, sind also Richtungen, die zur Referenzachse senkrecht verlaufen.

Durch das Verformungsmuster kann ein gezieltes Verkippen des Bremsringes bewirkt sein, so dass ein zunächst vorhandener Taumel reduziert ist.

Zur Klarstellung: Die oben gemachten Aussagen zu (radialen) Richtungen bzgl. des Verformungsmusters beziehen sich auf Lagen (genauer: azimuthale Positionen, azimuthale Koordinaten) von Verformungen bestimmter Stärke, nicht aber auf Richtungen von Krafteinwirkungen, die zu den Verformungen führen.

In einer zweiten zusätzlichen Sichtweise, die mit der ersten zusätzlichen Sichtweise kombiniert werden kann, weist die Verbundbremsscheibe einen Bremsring mit mindestens einer Bremsfläche und einen Bremsscheibentopf auf, wobei der Bremsscheibentopf einen rohrförmigen Abschnitt und einen mit dem rohrförmigen Abschnitt verbundenen Bodenteil aufweist, durch welchen eine Referenzebene und eine zu der Referenzebene senkrechte Referenzachse definiert sind. Durch den rohrförmigen Abschnitt ist eine Rohrachse definiert. Und ein Taumelwinkel (der z.B. durch das beschriebene Verfahren verringert wurde) zwischen der mindestens einen Bremsfläche und der Referenzebene ist kleiner als ein Kippwinkel zwischen der Rohrachse und der Referenzachse.

In diesem Fall ist gewissermassen der Taumelwinkel klein, unter Inkaufnahme eines vergrösserten Kippwinkels.

Die erste und die zweite radiale Richtung können in einer Ebene liegen, die den Kippwinkel enthält.

Der Bremsscheibentopf und der Bremsring können zusammengefügte Einzelteile sein.

In manchen Ausführungsformen beinhaltet das Verformungsmuster eine Delle oder mehrere Dellen im Bremsscheibentopf.

In manchen Ausführungsformen beinhaltet das Verformungsmuster einen Bereich oder mehrere Bereiche verringerter Materialstärke des Bremsscheibentopfes. Dabei kann sich das "Verringern der Materialstärke" insbesondere auf eine Materialstärke im Umformbereich relativ zu einer Materialstärke ein einem an den Umformbereich angrenzenden Bereich beziehen.

Es wird darauf hingewiesen, dass die oben beschriebenen Ausführungsvarianten jeweils mit einer oder mehreren der anderen beschriebenen Ausführungsvarianten kombiniert werden können. Das gilt für die Verbundbremsscheibe wie auch für die Verfahren.

Und die Erfindung kann auch Verfahren mit Merkmalen, umfassen, die sich aus den Merkmalen von beschriebenen Verbundbremsscheiben ergeben, sowie auch Verbundbremsscheiben mit Merkmalen, umfassen, die sich aus den Merkmalen von beschriebenen Vorrichtungen ergeben.

Weitere Ausführungsformen und Vorteile gehen aus den abhängigen Patentansprüchen und den Figuren hervor.

Im folgenden wird der Erfindungsgegenstand anhand von Ausführungsbeispielen und den beiliegenden Zeichnungen näher erläutert. Es zeigen :
- Fig. 1: ein Detail einer in Bearbeitung befindlichen Verbundbremsscheibe, in einem durch die Referenzachse verlaufendem Schnitt;
- Fig. 2: ein Detail einer in Bearbeitung befindlichen Verbundbremsscheibe, in einem durch die Referenzachse verlaufendem Schnitt;
- Fig. 3: ein Detail einer in Bearbeitung befindlichen Verbundbremsscheibe, in einem durch die Referenzachse verlaufendem Schnitt;
- Fig. 4: ein Detail einer in Bearbeitung befindlichen Verbundbremsscheibe, in einem durch die Referenzachse verlaufendem Schnitt;
- Fig. 5: ein Detail einer in Bearbeitung befindlichen Verbundbremsscheibe, in einem durch die Referenzachse verlaufendem Schnitt;
- Fig. 6A: eine schematische Illustration eines kontinuierlichen Verformungsmusters;
- Fig. 6B: eine schematische Illustration eines sektoriellen (diskontinuierlichen) Verformungsmusters;
- Fig. 6C: eine schematische Illustration eines sektoriellen (diskontinuierlichen) Verformungsmusters;
- Fig. 7: eine schematische Illustration einer Verbundbremsscheibe vor und nach der Umformung, in einem durch die Referenzachse verlaufendem Schnitt.

Für das Verständnis der Erfindung nicht wesentliche Teile sind zum Teil nicht dargestellt. Die beschriebenen Ausführungsbeispiele stehen beispielhaft für den Erfindungsgegenstand oder dienen seiner Erläuterung und haben keine beschränkende Wirkung.

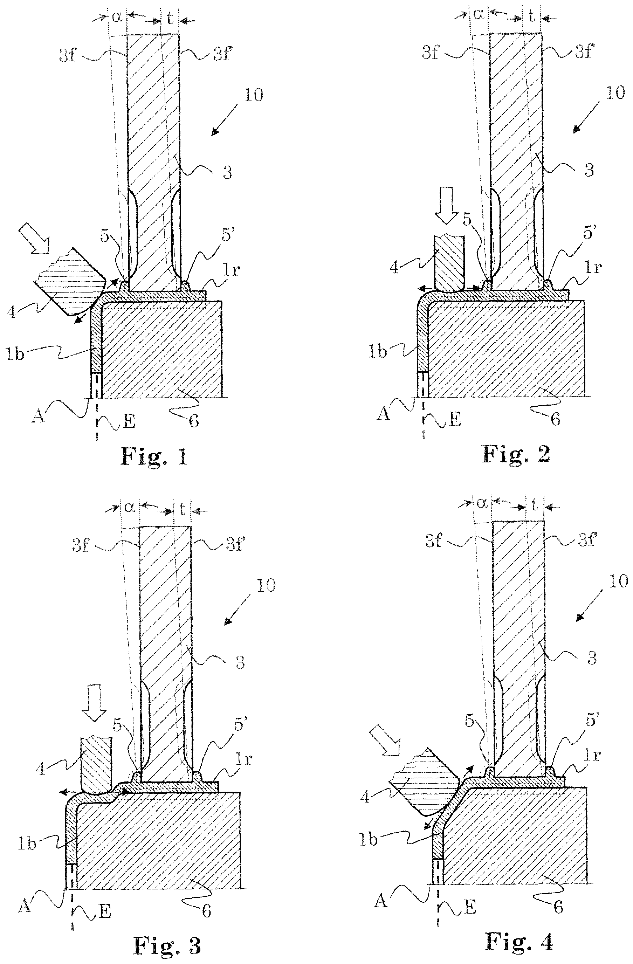

Figuren 1 bis 5 zeigen jeweils ein Detail einer in Bearbeitung befindlichen Verbundbremsscheibe 10 in einem durch eine Referenzachse A verlaufendem Schnitt.

Die Verbundbremsscheiben 10 weisen jeweils einen Bremsscheibentopf 1 und einen Bremsring 3 auf, die zusammengefügt sind und zuvor als separate Teile gefertigt wurden.

Der Bremsscheibentopf 1 weist einen rohrförmigen Abschnitt 1r und einen mit dem rohrförmigen Abschnitt verbundenen Bodenteil 1b auf. Durch den Bodenteil ist eine Referenzebene E definiert. Die Referenzachse A steht senkrecht auf der Referenzebene E.

In den Figuren 1 bis 5 ist jeweils gepunktet die Option angedeutet, dass der rohrförmiger Abschnitt 1r eine Aussenprofilierung, z.B. eine Aussenverzahnung, aufweist und der Bremsring 3 eine entsprechende Innenprofilierung, z.B. eine Innenverzahnung, aufweist. Dadurch kann eine Verdrehsicherung des Bremsringes 3 gegenüber dem Bremsscheibentopf 1 gebildet sein.

Durch Axialanschläge 5, 5' kann eine Axialsicherung gebildet sein, die verhindert, dass Bremsscheibentopf 1 und Bremsring 3 im zusammengefügten Zustand relativ zueinander entlang der Referenzachse A bewegbar sind.

Beim Zusammenfügen kann der Bremsring 3 auf den rohrförmigen Abschnitt 1r aufgeschoben werden und dann axial gesichert werden, so dass schliesslich beide Teile fest miteinander verbunden sind.

In einem Befestigungsbereich, der sich in den Ausführungsformen gemäss Figs. 1 bis 5 vom Axialanschlag 5 bis zum Axialanschlag 5' erstreckt, sind Bremsring 3 und Bremsscheibentopf 1 miteinander in Kontakt.

Es kann vorkommen, dass die Bremsflächen 3f, 3f' in diesem Zustand nicht ausreichend parallel zur Referenzebene A ausgerichtet sind. Dies ist durch den gestrichelt gezeichneten Bremsring dargestellt. Es besteht also ein zu grosser Taumelwinkel α, entsprechend einem zu grossen Taumel t. Der Schnitt der Figuren 1 bis 5 verläuft jeweils in derjenigen Ebene, in der der Taumel t maximal ist (so dass der Taumelwinkel α in der Ebene darstellbar ist). Taumel t und Taumelwinkel α sind in den Figuren 1 bis 5 stark übertrieben gross dargestellt. Tatsächliche Taumel können beispielsweise zwischen 0.02 mm und 0.5 mm betragen.

In den Figuren 1 bis 5 ist mittels durchgezogener Linien der Bremsring in optimaler Ausrichtung, also ohne Taumel (d.h. mit Taumelwinkel 0°) dargestellt. Dann verläuft die Referenzachse A senkrecht zu den Bremsflächen 3f, 3f'.

Um den vor dem Umformen bestehenden Taumelwinkel α und den (maximalen) Taumel t zu verkleinern, wird der Bremsscheibentopf 1 in definierter Weise umgeformt.

Der Bremsscheibentopf 1 kann mittels eines symbolisch dargestellten Werkzeuges 4 umgeformt werden. Währenddessen kann der Bremsscheibentopf 1 mittels eines Gegenhalters 6 gehalten werden. Werkzeug 4 greift in den Figuren 1 bis 5 von aussen in den Bremsscheibentopf 1 ein, während Gegenhalter 6 innerhalb des Bremsscheibentopfes 1 angeordnet ist. Die umgekehrte Anordnung (Gegenhalter ausserhalb Bremsscheibentopf und Werkzeugeingriff innerhalb Bremsscheibentopf) ist ebenfalls möglich.

In den Figuren 1 bis 4 wird mittels Werkzeug 4 lokal in einem Umformbereich die Wandstärke des Bremsscheibentopfes 1 verringert. Durch die Bearbeitung mittels des Werkzeugs 4 kann Material der Bremsscheibentopfes 1 wegtliessen (durch die kleinen Pfeile symbolisiert), so dass ein äusserer Rand des Bremsrings im azimuthalen Winkelbereich der Umformung von der Referenzebene E weg bewegt wird. In den Figs. 1 bis 5 symbolisiert ein offener Pfeil die Richtung der Kraft, die vom jeweiligen Werkzeug 4 auf den jeweiligen Bremsscheibentopf 1 ausgeübt wird, um die Umformung des Bremsscheibentopfes 1 zu bewirken. Die Richtung der Krafteinleitung kann beispielsweise senkrecht zur Oberfläche des Bremsscheibentopfes im Umformbereich sein.

In einer Ausführungsform kann die Krafteinleitungsrichtung innerhalb von 30° senkrecht zur bearbeiteten Oberfläche des Bremsscheibentopfes 1 ausgerichtet sein.

In Fig. 1 findet die Umformung in einem Übergangsbereich vom Bodenteil 1b zum rohrförmigen Abschnitt 1r statt.

In Fig. 2 findet die Umformung im rohrförmigen Abschnitt 1r statt. Ausserdem findet die Umformung im Fall von Fig. 2 in einem Bereich statt, in dem der rohrförmige Abschnitt 1r mit einer Aussenverzahnung versehen ist.

In Fig. 3 findet die Umformung im rohrförmigen Abschnitt 1r statt. Ausserdem findet die Umformung im Fall von Fig. 3 ausserhalb eines Bereiches statt, in dem der rohrförmige Abschnitt 1r mit einer Aussenverzahnung versehen ist.

In Fig. 4 findet die Umformung in einem gewinkelten Übergangsbereich zwischen Bodenteil 1b zum rohrförmigen Abschnitt 1r statt.

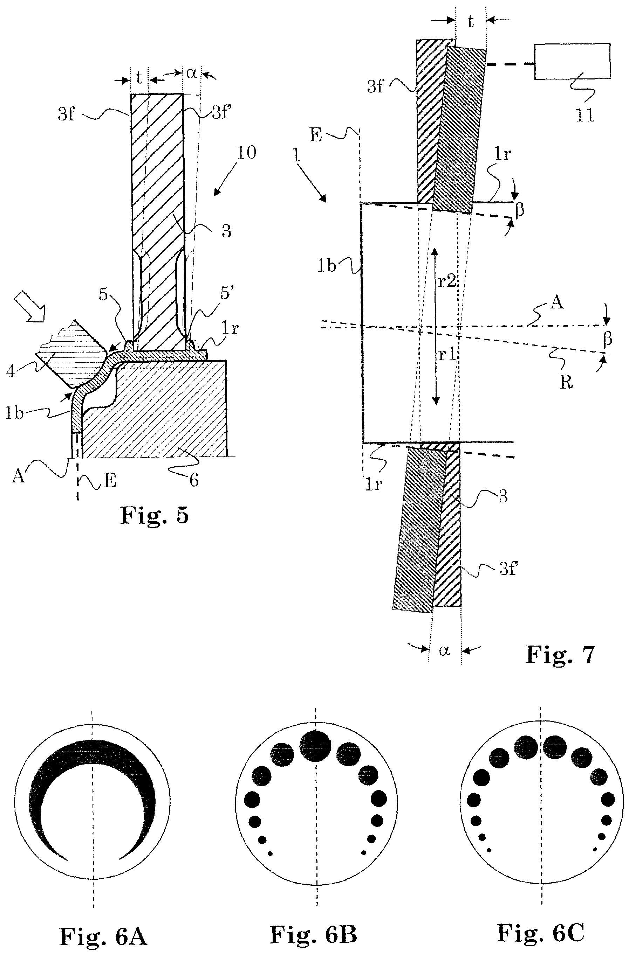

In Fig. 5 wird mittels Werkzeug 4 lokal eine Delle im Bremsscheibentopf 1 erzeugt. Der Gegenhalter 6 stützt den Bremsscheibentopf 1 nur ausserhalb des vom Werkzeug 4 bearbeiteten Umformbereiches. Im Bereich der Delle wird quasi Material des Bremsscheibentopfes 1 zusammengezogen (durch die kleinen Pfeile symbolisiert), so dass ein äusserer Rand des Bremsrings im azimuthalen Winkelbereich der Umformung auf die Referenzebene E zu bewegt wird.

Die Stärke der Verformung, die dem Bremsscheibentopf 1 jeweils (im azimuthalen Bereich maximaler Umformung) zugefügt wird, kann beispielsweise im Bereich 0.01 mm bis 2 mm liegen.

Es wird, zur Minimierung des Taumels, ein Verformungsmuster erzeugt, das mit dem Azimuthalwinkel (also über eine Umfangskoordinate) variiert.

Figs. 6A bis 6C veranschaulichen verschiedene Verformungsmuster in einem Blick entlang der Referenzachse. Die gestrichelte Linie symbolisiert die azimuthalen Richtungen maximalen Taumels. Je grösser oder dicker die schwarzen Fläche ist, desto stärker ist die Umformung in dem entsprechenden azimuthalen Bereich. Wie in Figs. 6A bis 6C dargestellt, können die Verformungsmuster spiegelsymmetrisch zu einer Ebene sein, in welcher der Taumelwinkel liegt.

Fig. 6A veranschaulicht ein Verformungsmuster, das eine kontinuierliche Verformung darstellt. Ein solches Verformungsmuster kann beispielsweise in einem einzigen Umformschritt erzeugt werden. Alternativ kann es durch eine Vielzahl nacheinander ausgeführter (Teil-) Umformschritte erzeugt werden.

Figs. 6B und 6C veranschaulichen sektorielle Verformungsmuster, die aus eine Mehrzahl einzelner Umformungen in verschiedenen azimuthalen Winkelbereichen zusammengesetzt sind. In einem Winkelbereich um die (gestrichelt dargestellte) azimuthalen Richtungen maximalen Taumels herum liegen einerseits die minimale und andererseits die maximale Verformungstärke vor.

Da in Figs. 1 bis 5 der als Kippwinkel β bezeichnete Winkel zwischen der Rohrachse R des rohrförmigen Abschnitts 1r und der Referenzachse A nicht gut zu erkennen ist, veranschaulicht Fig. 7 diesen wie auch den Taumelwinkel α in stark übertriebener Grösse. Fig. 7 ist stark schematisiert. Kippwinkel β und Taumelwinkel α sind eigentlich sehr kleine Winkel, kleiner als 0.2°, z.B. wenige hundertstel Grad, und somit schwierig zu messen.

Die mit r1 bzw. r2 bezeichneten Pfeile sind die radialen Richtungen, in deren Bereich plastische Verformungen zur Ausrichtung des Bremsrings 3 minimal bzw. maximal sind, weil dort der Taumel t maximal ist. Mit 11 ist ein Sensor bezeichnet, mittels dessen der Taumel t quantifiziert werden kann, so dass das Verformungsmuster in Abhängigkeit davon gewählt (z.B. berechnet) werden kann.

Für das Durchführen der Umformung können verschiedene Umformtechniken eingesetzt werden, z.B. Kaltumformtechniken. Einige mögliche Umformtechniken sind weiter oben genannt.

## Patentansprüche

1. Verfahren zur Herstellung einer Verbundbremsscheibe (10) aufweisend einen Bremsring (3) mit mindestens einer Bremsfläche (3f, 3f) und einen Bremsscheibentopf (1) aufweisend einen rohrförmigen Abschnitt (1r) und einen mit dem rohrförmigen Abschnitt (1r) verbundenen Bodenteil (1b), durch welchen eine Referenzebene (E) definiert ist, wobei die zuvor separaten Teile Bremsscheibentopf (1) und Bremsring (3) zusammengefügt werden, **dadurch gekennzeichnet, dass** nach dem Zusammenfügen ein Taumelwinkel (α) zwischen der mindestens einen Bremsfläche (3f, 3f') und der Referenzebene (E) durch Umformen des Bremsscheibentopfes (1) verringert wird.

2. Verfahren gemäss Anspruch 1, wobei durch den Bodenteil (1b) eine zu der Referenzebene (E) senkrechte Referenzachse (A) definiert ist und durch den rohrförmigen Abschnitt (1r) eine Rohrachse (R) definiert ist, und wobei durch das Umformen des Bremsscheibentopfes (1) ein Kippwinkel (β) zwischen der Rohrachse (R) und der Referenzachse (A) verändert wird.

3. Verfahren gemäss Anspruch 1 oder Anspruch 2, wobei der Bremsring (3) nach dem Zusammenfügen in einem Befestigungsbereich mit dem rohrförmigen Abschnitt (1r) in Kontakt ist, und wobei das Umformen des Bremsscheibentopfes (1) innerhalb eines axialen Bereiches stattfindet, der sich von einem bodenteilseitigen Ende des Befestigungsbereiches bis einschliesslich zum Bodenteil (1b) erstreckt.

4. Verfahren gemäss einem der Ansprüche 1 bis 3, wobei das Umformen des Bremsscheibentopfes (1) innerhalb eines Übergangsbereiches zwischen dem Bodenteil (1b) und dem rohrförmigen Teil stattfindet.

5. Verfahren gemäss einem der Ansprüche 1 bis 4, wobei eine Stärke des Umformens des Bremsscheibentopfes (1) entlang einer Umfangskoordinate variiert.

6. Verfahren gemäss einem der Ansprüche 1 bis 5, wobei das Umformen beinhaltet, dass der Bremsscheibentopf (1) mittels mindestens eines Werkzeuges (4) plastisch verformt wird.

7. Verfahren gemäss einem der Ansprüche 1 bis 6, wobei das Umformen beinhaltet, dass in dem Bremsscheibentopf (1) mindestens eine Delle erzeugt wird.

8. Verfahren gemäss einem der Ansprüche 1 bis 7, wobei das Umformen beinhaltet, dass eine Wandstärke des Bremsscheibentopfes (1) lokal reduziert wird.

9. Verfahren gemäss einem der Ansprüche 1 bis 8, wobei mittels eines Sensors (11) ein Mass für einen Taumel (t) der mindestens einen Bremsfläche (3f, 3f') relativ zu der Referenzebene (E) bestimmt wird und das Umformen des Bremsscheibentopfes (1) in Abhängigkeit von dem bestimmten Mass durchgeführt wird.

10. Verfahren gemäss einem der Ansprüche 1 bis 9, wobei der rohrförmige Abschnitt (1r) eine Aussenprofilierung aufweist und der Bremsring (3) eine entsprechende Innenprofilierung aufweist, und wobei die Aussenprofilierung und die Innenprofilierung zur Bildung einer Verdrehsicherung ineinandergreifen.

11. Verbundbremsscheibe (10), aufweisend einen Bremsring (3) mit mindestens einer Bremsfläche (3f, 3f') und einen Bremsscheibentopf (1) aufweisend einen rohrförmigen Abschnitt (1r) und einen mit dem rohrförmigen Abschnitt (1r) verbundenen Bodenteil (1b), durch welchen eine Referenzebene (E) und eine zu der Referenzebene (E) senkrechte Referenzachse (A) definiert sind, **dadurch gekennzeichnet, dass** der Bremsscheibentopf (1) ein Verformungsmuster aufweist, das im Bereich einer ersten radialen Richtung Verformungen des Bremsscheibentopfes (1) von maximaler Stärke aufweist, im Bereich einer der ersten radialen Richtung entgegengesetzten zweiten radialen Richtung Verformungen des Bremsscheibentopfes (1) von minimaler Stärke aufweist und in Bereichen von radialen Richtungen, die zwischen der ersten und der zweiten radialen Richtung liegen, Verformungen des Bremsscheibentopfes (1) aufweist, deren Stärke mit zunehmendem Winkelabstand von der ersten Richtung bis zu der minimalen Stärke abnimmt, wobei radiale Richtungen Richtungen sind, die zu der Referenzachse (A) senkrecht verlaufen, und wobei die minimale Stärke null ist oder von null verschieden ist.

12. Verbundbremsscheibe (10) gemäss Anspruch 11, wobei die erste und die zweite radiale Richtung in einer Ebene liegen, die den Kippwinkel (β) enthält.

13. Verbundbremsscheibe (10) gemäss Anspruch 11 oder Anspruch 12, wobei das Verformungsmuster eine Delle (9) oder mehrere Dellen (9) im Bremsscheibentopf (1) beinhaltet.

14. Verbundbremsscheibe (10) gemäss einem der Ansprüche 11 bis 13, wobei das Verformungsmuster einen Bereich oder mehrere Bereiche verringerter Materialstärke des Bremsscheibentopfes (1) beinhaltet.

## Claims

1. A method for manufacturing a composite brake disc (10) comprising a brake ring (3) with at least one braking surface (3f, 3f) and a brake disc chamber (1) comprising a tubular section (1r) and a base part, the base part (1b) being connected to the tubular section and defining a reference plane (E), wherein the previously separate parts brake disc chamber (1) and brake ring (3) are joined together, **characterized in that** subsequently to the joining together, a wobble angle (α) between the at least one braking surface (3f, 3f') and the reference plane (E) is reduced by reshaping the brake disc chamber (1).

2. The method according to claim 1, wherein a reference axis which is perpendicular to the reference plane (E) is defined by the base part (1b), and a tube axis (A) is defined by the tubular section (1r), and a tilt angle (β) between the tube axis (R) and the reference axis (A) is changed by the reshaping of the brake disc chamber (1).

3. The method according to claim 1 or claim 2, wherein the brake ring (3) is in contact with the tubular section (1r) in a fastening region after the joining together, and wherein the reshaping of the brake disc chamber (1) takes place within an axial region which extends from the base-part-side end of the fastening region up to and including the base part (1b).

4. The method according to one of the claims 1 to 3, wherein the reshaping of the brake disc chamber (1) takes place within a transition region between the base part (1b) and the tubular part.

5. The method according to one of the claims 1 to 4, wherein a degree of the reshaping of the brake disc chamber (1) varies along a circumferential coordinate.

6. The method according to one of the claims 1 to 5, wherein the reshaping comprises the brake disc chamber (1) being plastically deformed by at least one tool (4).

7. The method according to one of the claims 1 to 6, wherein the reshaping comprises at least one indentation being produced in the brake disc chamber (1).

8. The method according to one of the claims 1 to 7, wherein the reshaping comprises the wall thickness of the brake disc chamber (1) being locally reduced.

9. The method according to one of the claims 1 to 8, wherein a measure for a wobble (t) of the at least one braking surface (3f, 3f') relative to the reference plane (E) is determined by means of a sensor (11), and the reshaping of the brake disc chamber (1) is carried out in dependence of the determined measure.

10. The method according to one of the claims 1 to 9, wherein the tubular section (1r) comprises an outer profiling, and the brake ring (3) comprises a corresponding inner profiling, and wherein the outer profiling and the inner profiling mesh into one another for forming a rotational securing.

11. A composite brake disc (10), comprising a brake ring (3) with at least one braking surface (3f, 3f'), and a brake disc chamber (1) comprising a tubular section (1r) and a base part (1b), the base part being connected to the tubular section and defining a reference plane (E) and a reference axis (A) which is perpendicular to the reference plane (E), characterized ub that the brake disc chamber (1) comprises a deformation pattern which in the region of a first radial direction, comprises deformations of the brake disc chamber (1) of a maximal degree, and comprises in the region of a second radial direction, which is opposite to the first radial direction, deformations of the brake disc chamber (1) of a minimal degree and comprises in regions of radial directions which lie between the first and the second radial directions deformations of the brake disc chamber (1) of degrees decreasing with an increasing angular distance from the first direction, down to the minimal degree, wherein radial directions are directions running perpendicularly to the reference axis (A), and wherein the minimal degree is zero or is different from zero.

12. The composite brake disc (10) according to claim 11, wherein the first radial direction and the second radial direction lie in a plane comprising the tilt angle (β).

13. The composite brake disc (10) according to claim 11 or claims 12, wherein the deformation pattern comprises an indentation (9) or several indentations in the brake disc chamber (1).

14. The compose brake disc (10) according to one of the claims 11 to 13, wherein the deformation pattern comprises one region or several regions of a reduced material thickness of the brake disc chamber (1).

## Revendications

1. Procédé de fabrication d'un disque de frein composite (10) présentant un anneau de frein (3) doté d'au moins une surface de freinage (3f, 3f') et un chapeau (1) de disque de frein doté d'une section (1r) de forme tubulaire et d'une partie de fond (1b) reliée à la section (1r) de forme tubulaire et définissant un plan de référence (E),
dans lequel les pièces initialement séparées que sont le chapeau (1) de disque de frein et l'anneau de frein (3) sont assemblées,
**caractérisé en ce que**
après l'assemblage, l'angle de nutation (α) entre la ou les surfaces de freinage (3f, 3f') et le plan de référence (E) est diminué par déformation du chapeau (1) de disque de frein.

2. Procédé selon la revendication 1, dans lequel la partie de fond (1b) définit un axe de référence (A) perpendiculaire au plan de référence (E) et la section (1r) de forme tubulaire définit un axe de tube (R), la déformation du chapeau (1) de disque de frein modifiant l'angle d'inclinaison (β) entre l'axe de tube (R) et l'axe de référence (A).

3. Procédé selon la revendication 1 ou la revendication 2, dans lequel après l'assemblage, l'anneau de frein (3) est en contact avec la section (1r) de forme tubulaire dans une partie de fixation, la déformation du chapeau (1) de disque de frein ayant lieu dans d'une partie axiale qui s'étend de l'extrémité de la partie de fixation située du côté de la partie de fond jusqu'à la partie de fond (1b) incluse.

4. Procédé selon l'une des revendications 1 à 3, dans lequel la déformation du chapeau (1) de disque de frein a lieu dans d'une partie de transition entre la partie de fond (1b) et la partie de forme tubulaire.

5. Procédé selon l'une des revendications 1 à 4, dans lequel l'ampleur de la déformation du chapeau (1) de disque de frein varie suivant la coordonnée périphérique.

6. Procédé selon l'une des revendications 1 à 5, dans lequel la déformation comprends une déformation plastique du chapeau (1) de disque de frein au moyen d'au moins un outil (4).

7. Procédé selon l'une des revendications 1 à 6, dans lequel la déformation comprends une formation d'au moins un creux dans le chapeau (1) de disque de frein.

8. Procédé selon l'une des revendications 1 à 7, dans lequel la déformation comprends une réduction locale de l'épaisseur de la paroi du chapeau (1) de disque de frein.

9. Procédé selon l'une des revendications 1 à 8, dans lequel l'amplitude de la nutation (t) de la ou des surfaces de freinage (3f, 3f') par rapport au plan de référence (E) est déterminée moyennant d'un senseur (11) et la déformation du chapeau (1) de disque de frein est réalisée en fonction de l'amplitude qui a été déterminée.

10. Procédé selon l'une des revendications 1 à 9, dans lequel la section (1r) de forme tubulaire est profilée extérieurement et l'anneau de frein (3) est profilé intérieurement de manière complémentaire, le profil extérieur et le profil intérieur s'engageant l'un dans l'autre de manière à empêcher que l'un tourne par rapport à l'autre.

11. Disque de frein composite (10) présentant un anneau de frein (3) doté d'au moins une surface de freinage (3f, 3f') et un chapeau (1) de disque de frein doté d'une section (1r) de forme tubulaire et d'une partie de fond (1b) reliée à la section (1r) de forme tubulaire et définissant un plan de référence (E) et un axe de référence (A) perpendiculaire au plan de référence (E),
**caractérisé en ce que**
le chapeau (1) de disque de frein présente un motif de déformation qui présente des déformations d'ampleur maximale du chapeau (1) de disque de frein dans une première direction radiale, des déformations d'ampleur minimale du chapeau (1) de disque de frein dans une deuxième direction radiale opposée à la première direction radiale et dans des directions radiales situées entre la première et la deuxième direction radiale, des déformations du chapeau (1) de disque de frein dont l'ampleur diminue jusqu'à l'ampleur minimale avec l'augmentation de l'écart angulaire par rapport à la première direction radiale, les directions radiales étant des directions perpendiculaires à l'axe de référence (A), l'ampleur minimale étant nulle ou différente de zéro.

12. Disque de frein composite (10) selon la revendication 11, dans lequel la première et la deuxième direction radiale s'étendant dans un plan qui contient l'angle d'inclinaison (β).

13. Disque de frein composite (10) selon la revendication 11 ou la revendication 12, dans lequel le motif de déformation contient un creux (9) ou plusieurs creux (9) dans le chapeau (1) de disque de frein.

14. Disque de frein composite (10) selon l'une des revendications 11 à 13, dans lequel le motif de déformation contient une partie ou plusieurs parties d'épaisseur réduite du chapeau (1) de disque de frein.
